# EUROPEAN PATENT APPLICATION

(11) **EP 4 687 019 A1**
(43) Date of publication of application: **04.02.2026**
(21) Application number: 25191507.0
(22) Date of filing: 24.07.2025
(51) Int. Cl.: G06F 3/06, G06F 12/02

(54) **COMMAND CONVERTER FOR GRANULARITY INCOMPATIBILITY IN MEMORY ACCESSES**

(30) Priority: 01.08.2024 US 202463678531 P; 02.06.2025 US 202519226140
(71) Applicant: Samsung Electronics Co., Ltd., Suwon-si, Gyeonggi-do 16677 (KR)
(72) Inventor: LI, Zongwang, San Jose, CA, 95134 (US); KI, Yang Seok, San Jose, CA, 95134 (US); PITCHUMANI, Rekha, San Jose, CA, 95134 (US)
(74) Representative: Kuhnen & Wacker Patent- und Rechtsanwaltsbüro PartG mbB

(57) **Abstract**

A command converter for interfacing to a wide-IO solid-state storage is disclosed. A first buffer (436) is configured to store first data of a first access type from an access request device (282) having a first granularity. An address list (432) is configured to store at least one address of the first data and to have at least a first status and a second status associated with the at least one address. An access matcher (428) is configured to generate an access result based on a comparison of a request address and the at least one address in the address list (432). A logic circuit (426) is configured to perform an action based on at least one of the access result, the first status, or the second status. The action includes combining the first data into a second data of a second access type having a second granularity larger than the first granularity.

## Description

### TECHNICAL FIELD

The disclosure generally relates to solid-state storage. More particularly, the subject matter disclosed herein relates to command converter for wide-IO solid-state storage.

### BACKGROUND

The present background section is intended to provide context only, and the disclosure of any concept in this section does not constitute an admission that said concept is prior art.

Advances in data science, artificial intelligence (AI), and machine learning (ML) have led to transformative changes in technologies across various industries. To accommodate these changes, semiconductor devices and systems have also been developed with new technologies including computing architecture, processor and memory designs, network security, and communication interfaces. Among these developments, memory designs or interfaces have become more and more significant, especially in applications that require low power and small physical spaces such as mobile devices.

Among the advanced memory designs and interfaces, wide-input/output (IO) interface has become popular for three-dimensional (3D) or highly dense integrated circuits (ICs) such as low power double data rate (LPDDR) dynamic random access memory (DRAM) (e.g., LPDDR6). In addition, advances in solid-state drive (SSD) technology for flash memory have created high storage capacity for non-volatile storage devices. NAND design has become the most commonly used type in SSDs. However, designs using NAND devices to accommodate wide-IO interface have faced many challenges. These challenges include granularity incompatibility, low bandwidth utilization, long latency, high power consumption, high write amplification, and inefficient data buffering.

The above information disclosed in this Background section is only for enhancement of understanding of the background of the disclosure and therefore it may contain information that does not constitute prior art.

### SUMMARY

To overcome these issues, systems and methods are described herein for a technique of command converter for wide-IO interfaces. The technique aims at providing an efficient structure for interfacing a wide-IO solid-state storage. Advantages of the technique include high bandwidth utilization, low latency, low power, reduced write amplification and read disturbance, reduced page open and close frequency, and efficient control of data buffering. In an embodiment, the command converter includes a first buffer, an address list, an access matcher, and a logic circuit. The first buffer is configured to store first data of a first access type from an access request device such as a host processor. The first access type has a first granularity. The address list is configured to store at least one address of the first data and to have at least a first status and a second status associated with the at least one address. The access matcher is configured to generate an access result based on a comparison of a request address and the at least one address in the address list. The logic circuit is configured to perform an action based on at least one of the access result, the first status or the second status. The first status is exemplarily associated with a granularity completion and the second status is exemplarily associated with a modification of data in the first buffer. The action includes at least combining the first data into a second data of a second access type having a second granularity larger than the first granularity.

### BRIEF DESCRIPTION OF THE DRAWINGS

In the following section, the aspects of the subject matter disclosed herein will be described with reference to exemplary embodiments illustrated in the figures, in which:
FIG. 1 is a block diagram illustrating a system according to an embodiment.
FIG. 2 is a diagram illustrating a low power wide-IO circuit according to an embodiment.
FIG. 3 is a diagram illustrating a granularity conversion scheme according to an embodiment.
FIG. 4 is a diagram illustrating a command converter according to an embodiment.
FIG. 5 is a diagram illustrating a buffer and address circuit according to an embodiment.
FIG. 6 is a flowchart illustrating a process for a read access request according to an embodiment.
FIG. 7 is a flowchart illustrating a process for a write access request according to an embodiment.
FIG. 8 is a flowchart illustrating a continuation for read and write access processes according to an embodiment.
FIG. 9 is a diagram illustrating a processing system according to an embodiment.

### DETAILED DESCRIPTION

**In** the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

As used herein, the term "solid-state" in the context of storage refers to a storage technology that uses integrated circuits, instead of moving parts (e.g., spinning disks, platters, read/write heads) to store data. The term "flash memory" refers to a type of non-volatile memory which retains data even when power is removed. It is commonly used in solid-state drives (SSDs). There are two types of flash memory: NAND flash and NOR flash. The NAND flash memory has high storage density and lower cost per bit and is suitable for SSDs, mobile applications. The NOR flash is optimized for random access and is often used in applications requiring fast code execution.

As used herein, the term "buffer" in the context of storage refers to a memory device that store data or information on a temporary basis as part of an operation that involves moving data from one location to another. A buffer is typically implemented by static random-access memory (RAM) for fast access. A buffer may be organized as a standard SRAM or a first-in-first-out (FIFO) organization.

As used herein, the term "list" in the context of storage refers to a storage element that store information or data which may be represented as a list of items. The storage element may be implemented by any suitable devices or circuits, including registers, static RAM, DRAM, or SSD. An address list therefore is a storage element that stores information related to address of a memory.

In an embodiment, a command converter includes a first buffer, an address list, an access matcher, and a logic circuit. The first buffer is configured to store first data of a first access type from an access request device having a first granularity. The address list is configured to store at least one address of the first data and to have at least a first status and a second status associated with one of the at least one address. The access matcher is configured to generate an access result based on a comparison of a request address and the at least one address in the address list. The logic circuit is configured to perform an action based on at least one of the access result, the first status or the second status. The first status is associated with a granularity completion and the second status is associated with a modification of data in the first buffer. The action includes combining the first data into a second data of a second access type having a second granularity larger than the first granularity.

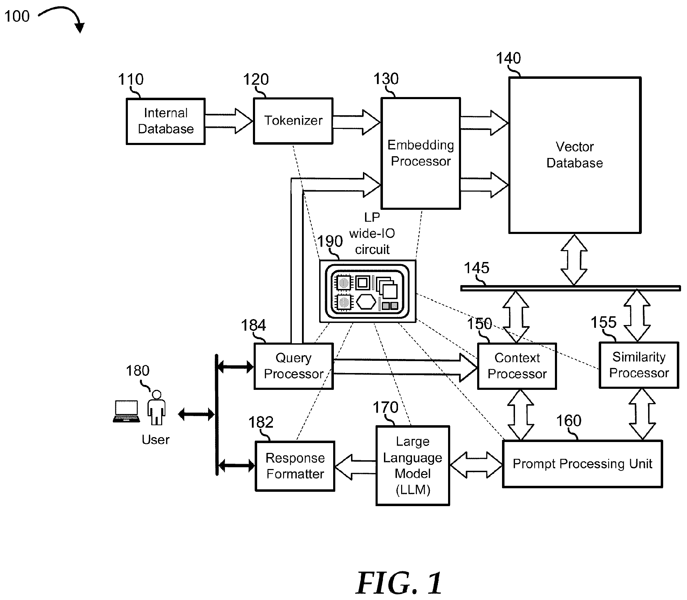

FIG. 1 is a block diagram illustrating a system 100 according to an embodiment. The system 100 illustrates the important role of low power wide-IO solid-state storage devices in a typical AI application. The AI application in the system 100 is a machine learning system with a large language model (LLM). The LLM performs inference and typically includes two main parts: prompt processing and generating response to queries. In a typical application, the LLM needs to fetch huge amounts of data representing model parameters and forward to appropriate processing elements such as central processing unit (CPU), graphics processing unit (GPU), and neural processing unit (GPU), and specialized processors including applications specific integrated circuits (ASICs). The memory requirements for the LLM-based system include high bandwidth RAM and wide-IO NAND flash memory devices.

The system 100 includes an internal database 110, a tokenizer 120, an embedding processor 130, a vector database 140, a connectivity link 145, a context processor 150, a similarity processor 155, a prompt processing unit 160, a large language model (LLM) 170, a response formatter 182, a query processor 184, and low power (LP) wide-IO storage circuit 190. The system 100 may include more or less than the above components. The system 100 illustrates an exemplary architecture of an artificial intelligence (AI) query-and-response application. This query-and-response application receives queries from a user 180 and provides the response using the LLM 170. This type of application may be implemented by hardware or software or a combination of both. The reason why this application is used as an example to illustrate the role of the wide-IO solid state storage (e.g., NAND devices) is that it uses very large computational resources including large storages for data and high computations. Whether it is implemented by hardware, software, or a combination of both, the basic component of the system is a low power wide-IO solid-state storage circuit 190 that may be used with processing circuit to perform all or parts of the functions of the tokenizer 120, the embedding processor 130, the context processor 150, the similarity processor 155, the prompt processing unit 160, the LLM 170, the response formatter 182, and the query processor 184. Some of the components may be parts of other components. For example, the tokenizer 120 and the embedding processor 130 may be parts of the LLM 170.

The internal database 110 is a database that stores data or information that is private to an organization and is not available publicly. The query session may be used by an employee of a company and therefore the data may be private or proprietary to the company. The internal database 110 may not be needed if the query is for public information. The tokenizer 120 processes the data from the internal database 110 and prepares for use in subsequent stages. A typical input is a text or a sentence. The tokenizer 120 breaks the text into smaller units, called tokens, which may be a word or a phrase, or a form that can be processed by other units. Typically, this task may include extracting relevant information from the text and represent this information by meaningful numbers. This may be performed by a special program, or a special circuit which may be implemented in an application-specific integrated circuit (ASIC). Such an ASIC would need to have fast access to memories which store the texts and the tokens. Wide-IO NAND flash devices with interfaces to LPDDR6 devices are useful for this purpose.

The embedding processor 130 operates on the output of the tokenizer and the query processor to convert this textual representation into a numeric representation that follows some predefined format. The embedded representation typically has several fields of numbers which may correspond to relevance, relationship, or any characteristics that are useful for processing. These embedded representations typically form vectors. For example, the textual representation "I love New York" may be embedded into a vector having five fields: [0.312, -7.215, 3.126, - 0.015, 2.761]. The embedding process may be implemented in hardware using an LP wide-IO circuit 190 including a processing circuit that calculates the vector representation and storage elements that store information retrieved from the internal database 110. The resulting vectors may be stored in the vector database 140 or may be processed with data read from the vector database 140. The vector database 140 store vectors that represent domain knowledge and/ or the query. The output of the vector database 140 may be passed to the context processor 150 and the similarity processor 155 via the connectivity link 145 for further processing. The connectivity link 145 may be a bus, a network connection, or any medium that allows data transfers between the vector database 140 and other devices including the context processor 150 and the similarity processor 155.

The context processor 150 provides contextual information to the query or queries. It receives query information from the query processor 184. The contextual information expands the meaning of the query or queries to include information that is relevant to the content of the query or queries and/or user's background and experience. For example, the queries "What is the capital of California?" "What to do in Central California?" and "Where is Yosemite?" may create a context of traveling. This context will obtain vectors that are related to traveling in California including lodging information and attractions. The context processor 150 therefore requires fast computation to perform searches and matching. It also needs a large memory space to store data. The similarity processor 155 performs matching of candidate vectors to the query vector or vectors to locate the vectors that are most relevant to the query. Depending on the format of the query, an appropriate similarity measure may be determined. For example, for vectors with many numerical values, a cosine similarity may be used. This similarity measure requires calculating an inner product and magnitudes of two vectors. When searching for relevant vectors, thousands of such computations may be performed. This number of computations necessitates an ASIC dedicated for similarity computations. Accordingly, the similarity processor 155 may be efficiently implemented by multiple highly integrated circuits that include computational elements in forms of ASIC chiplets for fast and parallel computations. In addition, it should also have a large memory capacity and wide-IO interfaces to provide fast access to the vectors. Both the context processor 150 and the similarity processor 155 would also need efficient input/output (IO) circuits to perform fast data transfers to and from the vector database 140 and the prompt processing unit 160.

The prompt processing unit 160 receives results from the context processor 150 and the similarity processor 155 to further provide guidance to steer the LLM 170 to the appropriate direction. Due to the amount of vast information processed by the LLM 170, there is a good chance that the LLM 170 strays into off topic areas, referred to as hallucinations. The prompt processing unit 160 narrows down the search space, based on the contextual information from the context processor 150 and the candidate vectors from the similarity processor 155 and additional information such as user's profile, background, or experience. The prompt processing unit 160 may import domain-specific knowledge data to generate proper directions for the query. It may interact with the context processor 150 and the similarity processor 155 to generate prompts to the LLM 170. Accordingly, it would need a highly integrated system or processing elements and localized memory and IO or interface circuits including low power wide-IO solid-state storage circuits.

The LLM 170 obtains results from the prompt processing unit 160 including those of the context processor 150 and the similarity processor 155 to generate a response to the query. It also receives query information from the query processor 184. The LLM 170 includes a transformer model having computations that are partly offloaded to the tokenizer 120, the embedding processor 130, the context processor 150, and the similarity processor 155. It includes an encoder and decoder structure to create and process a contextualized representation of the query, a training model to learn the meaning of the query and process the query, an inference engine to reason for a proper response, and a fine-tuning structure to refine the responses based on the results of the context processor 150 and the similarity processor 155. Typically, the LLM 170 involves a massive amount of memory space and computations. Many of the computations may be performed in parallel where there is little or no dependency. Accordingly, the LLM 170 would need multiple highly integrated packages having several computational and memory elements with specific algorithms. This is most efficient by multiple ASICs with direct accesses to local memory devices.

The response formatter 182 receives one or more responses from the LLM 170. These responses correspond to the user query or queries. The response formatter 182 formats these responses in proper format and presentation style which may include graphics and animation. The result is then delivered to the user 180. Due to the amount of computations and IO interactions, the response formatter 182 is best implemented by a highly integrated subsystem 190 which includes multiple processors, memory (e.g., LPDDR6), wide-IO solid state storage devices, and IO circuits.

The query processor 184 processes the query from the user 180. This process may include tokenization as done by the tokenizer 120 and other formatting operations to convert the user's query into a form that can be further processed. The results of the query processor 184 are delivered to the embedding processor 130, the context processor 150, and the LLM 170. Though the computations in the query processor 184 may or may not be extensive, it often needs fast processing time and specialized procedures. Accordingly, the query processor 184 is best implemented by a highly integrated subsystem multiple processors, memory (e.g., LPDDR6), low power wide-IO solid-state storage circuits, and IO circuits.

The user 180 may be any user of the system and may include an individual, a team of people, or a computerized process. The user 180 may have a query that is in the public domain and expect the results to be obtained from the public domain. The user 180 may also be a user who has a private query that is particularized for the platform the user 180 is using. For example, the user 180 may be an individual who is interested in knowing the products offered by a company XYZ. As another example, the user 180 may belong to an organization such as a union or an association who wants to query a particular subject that is relevant only to that organization. Under this private setting, the internal database 110 is relevant.

The LP wide-IO solid-state storage circuit 190 provides highly integrated resources for the various storage components in the system 100. These resources may include memory for computations, data storage, processing operations, and other specialized functions. The LP wide-IO solid-state storage circuit 190 may be used in any one of the tokenizer 120, the embedding processor 130, the context processor 150, the similarity processor 155, the prompt processing unit 160, the LLM 170, the resource formatter 182, or the query processor 184, or any combination of these elements,

The system 100 is an example that illustrates the role of LP wide-IO solid-state storage circuits in high computing (HC) platforms. The use of a query application in AI shows that many HC platforms require several LP wide-IO solid-state storage circuits, including Wide-IO NAND SSD operating in conjunction with processing units or IO circuits. In many cases, the environment of the applications adds additional requirements including low power consumption, reliable signal integrity, fault-tolerance, and reliable operations in extreme conditions including heat and tight space. Examples of other applications that would benefit from a highly integrated wafer design include mobile communication (e.g., smart phones, base stations, user equipment), cameras, vehicles, entertainment (e.g., games, multimedia, music, movies), technical designs (e.g., animation, graphics), medical (e.g., visualization, medical imaging), robotics, drones, automatic test equipment, audio processing, speech synthesizer, video and image analysis, vision, automatic face recognition, artificial intelligence (AI) applications, and data centers.

In the following, the description will focus on several embodiments of the low power wide-IO storage circuit 190, including the granularity conversion between the access requests of the DRAM devices and the wide-IO SSD device. These embodiments may be combined to provide highly integrated and versatile memory circuits.

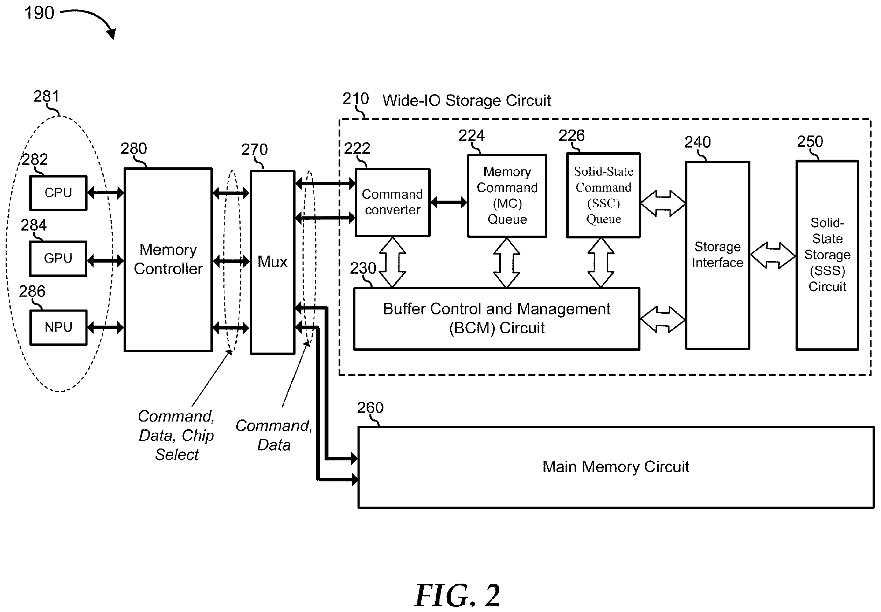

FIG. 2 is a diagram illustrating the low power (LP) wide-IO circuit 190 shown in FIG. 1 according to an embodiment. The low power (LP) wide-IO circuit 190 includes a wide-IO storage circuit 210, a main memory circuit 260, a multiplexing circuit (MUX) 270, and a memory controller 280. The LP wide-IO circuit 190 may include more or less than the above components. The LP wide-IO circuit 190 maintains interface compatibility with existing wide-IO DRAM interfaces to minimize modifications and ensure reliable performance. It also improves the access time due to the granularity between the main memory in the main memory circuit 260 and the solid-state storage in the wide-IO storage circuit 210.

The wide-IO storage circuit 210 includes circuits to provide wide-IO data access to SSD storage. It may be referred to as Rank 1 device in a memory extension organization. It is configured to operate together with the main memory circuit 260 or existing memory devices in a wide-IO configuration.

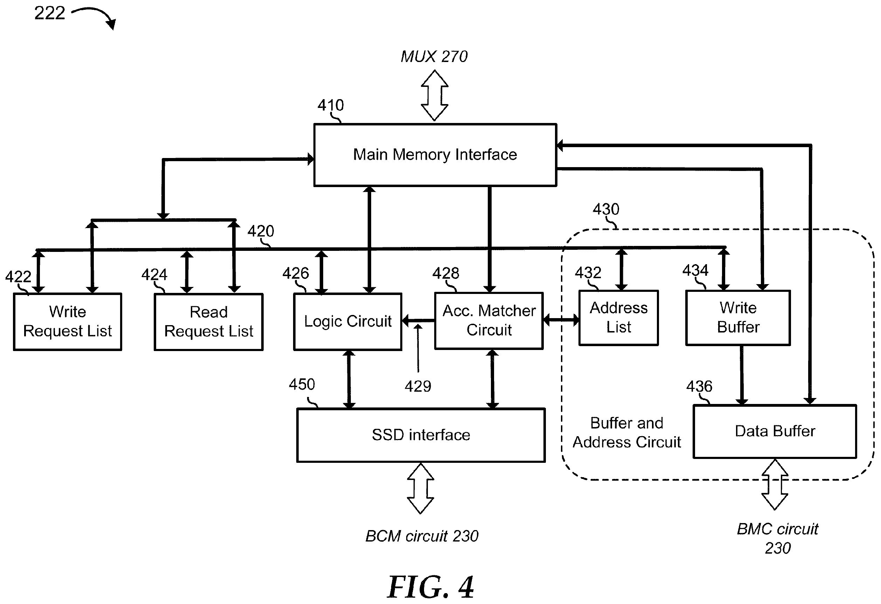

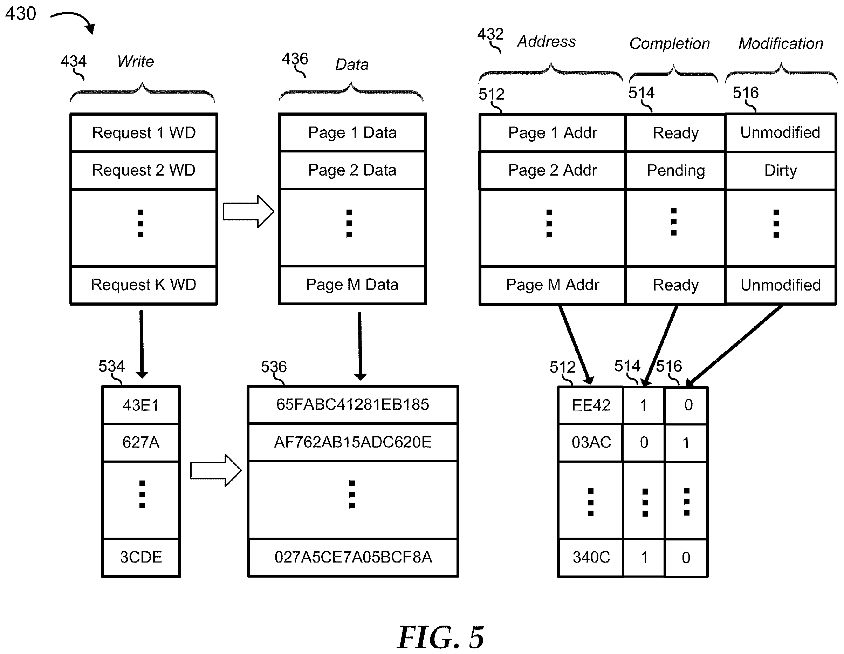

The wide-IO storage circuit 210 includes a command converter 222, a memory command (MC) queue 224, a solid-state command (SSC) queue 226, a buffer control and management (BCM) circuit 230, a storage interface 240, and a solid-state storage (SSS) circuit 250. The wide-IO storage circuit 210 may include more or less than the above components. The command converter 222 converts commands from the memory controller 280 to appropriate commands to the SSS circuit 250. The command converter 222 will be described further in FIGS. 4 and 5. The DRAM in the main memory circuit 260 has a small granularity (e.g., 64 bytes) while the granularity in the SSS circuit 250 is large (e.g., 16 KB) due to the wide-IO format. The command converter 222 is configured to convert commands or access requests from the DRAM in the main memory circuit 260 having a small granularity to the SSD device in the SSS circuit 250 having a large granularity. The MC queue 224 stores commands converted from the command converter 222, formats and arranges them in proper forms and order, and the schedules their execution. The SSC queue 226 stores commands from the BCM circuit 230 and interacts with the storage interface 240 to access the SSS circuit 250. The BCM 230 provides a structure to allow the SSS circuit 250 to interface with the wide-IO interface with the main memory circuit 260 and the memory controller 280. In addition, the BCM 230 provides solutions to the wide-IO interface using NAND devices to achieve low power, fast latency and high bandwidth utilization. The storage interface 240 provides an interface to the SSS circuit 250 including receiving commands and data and transmitting data. The SSS circuit 250 includes a solid-state storage circuit having a wide-IO configuration. It has NAND devices as the storage elements. It is referred to as a high-bandwidth NAND (HBN). As mentioned above, the wide-IO NAND devices in the SSS circuit 250 has a large granularity.

The main memory circuit 260 includes memory devices used as a main memory for the processing circuit 190. It is typically referred to as Rank 0 device in a memory extension organization. It may include fast DRAM devices, including LPDDR6 devices at speed 10.6 Gbps and beyond. The DRAM devices may have a data bus width of 24 bits. As mentioned above, the DRAM devices have a small granularity. The DRAM devices may be organized to comply with the Wide-IO standard. The devices may include stacked (3D) or 2.5D integration with logic circuits to increase bandwidth, low latency, with lower signal interferences, suitable for mobile applications. The Wide-IO may utilize a wide bus width of up to 1024 bits.

The MUX circuit 270 provides multiplexing control and communication to the memory controller 280. The MUX circuit 270 transfer control signals and data including commands, chip selects, enables, and data. The memory controller 280 interfaces with processing devices or hosts 281 including a CPU 282, a GPU 284, and an NPU 286. The interface may be any suitable interface that allows communication through channels for read and write transactions. In one embodiment, the interface is an Advanced eXtensible Interface (AXI). These processing elements may issue command signals such as access request for reads and writes to the main memory circuit 260.

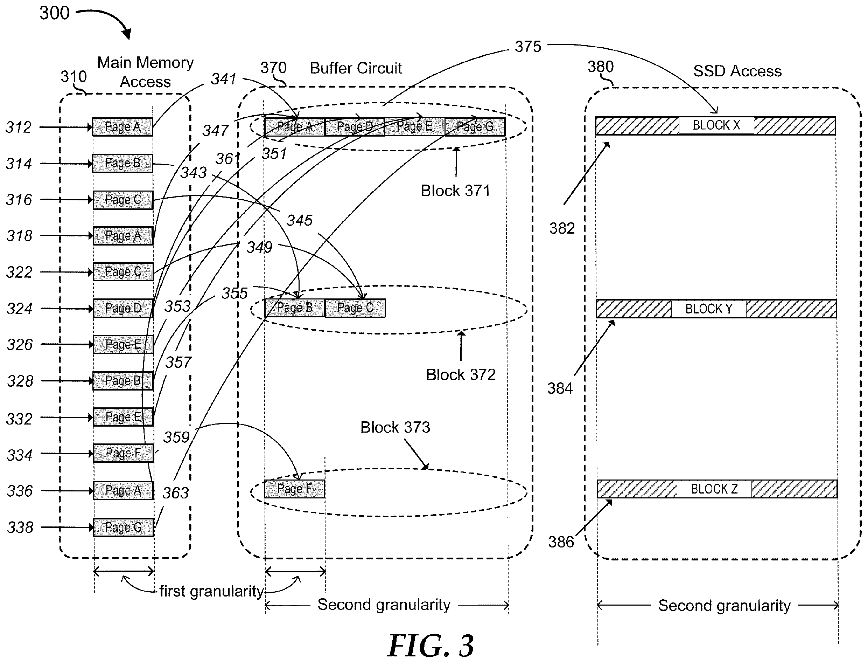

FIG. 3 is a diagram illustrating a granularity conversion scheme 300 according to an embodiment. The granularity conversion scheme 300 illustrates how to convert memory accesses from one granularity to another granularity. The scheme 300 only illustrates the concept of converting data access of a first access type having a first granularity to data access of a second access type having a second granularity. Specific details regarding reading and writing and other processes such as eviction are not described. The scheme 300 shows the process to convert the data from a first granularity to a second granularity larger than the first granularity. The reverse scheme may be similarly obtained. The scheme 300 involves three operations at three locations: a location 310 as a main memory access, a location 370 at a buffer circuit, and a location 380 as an SSD access. The location 310 includes access requests from main memory with the first granularity. The location 370 includes storage for data of the requests 310. The location 380 includes three blocks X, Y, and Z 382, 384, and 386, respectively, each having a second granularity.

The basic concept is based on the problem of mismatched granularities between two or more device types. In the context of memory devices and circuits, granularity refers to the size of a basic memory unit in memory accesses, either read or write. The mismatched granularities may cause inefficiency in data transfers or movements. For example, a low-power DRAM may have a granularity of 64 bytes while a wide-IO NAND device may have a granularity of 16 Kbytes. Data transfers across the two granularities result in under-utilization of the 16 Kbyte-granularity. In one embodiment, a solution is to accumulate the small granularity data requests until they fit into the large granularity access. Then, the accumulated data are transferred to the large granularity device in a burst mode. That way, significant time in data transfers can be saved. In addition, the wide-IO NAND device will not be accessed too often and therefore problems due to write amplification and read disturbance are significantly reduced.

The scheme 300 illustrates a sequence of memory access requests 310 from the main memory having the first granularity. Suppose there is a mapping that maps pages in the main memory to blocks in the SSD device. Suppose pages A, D, E, and G map into block 371, pages B and C map into block 372, and page F maps into block 373. The mapping is mainly for illustrative purposes and may not correspond to the actual mapping between the two types of storage devices.

The access request 312 references page A. Since page A has the first granularity which is smaller than the second granularity of the SSD, the access request 312 is not made directly to the SSD. Instead, the request is temporary stored in the buffer circuit 370. A transfer 341 moves page A to the buffer circuit 370. Next, a request 314 references page B. Since page B is mapped into a different block in SSD, it is temporarily moved to another block in the buffer circuit 370 via a transfer 343, and the process continues until data are accumulated to fit the second granularity. The sequence of requests can be listed below:
Request 312 → page A → Transfer 341 → block 371
Request 314 → page B → Transfer 343 → block 372
Request 316 → page C → Transfer 345 → block 372
Request 318 → page A → Transfer 347 → block 371
Request 322 → page C → Transfer 349 → block 372
Request 324 → page D → Transfer 351 → block 371
Request 326 → page E → Transfer 353 → block 371
Request 328 → page B → Transfer 355 → block 372
Request 332 → page E → Transfer 357 → block 371
Request 334 → page F → Transfer 359 → block 373
Request 336 → page A → Transfer 361 → block 371
Request 338 → page G → Transfer 363 → block 371

After the request 338, pages A, D, E, and G fill up the block 371. At this time, the block 371 is moved to the SSD 380 via a transfer 375 to Block X 382. All transfers up to the request 338 are done via the buffer circuit 370, not to the SSD 380. Therefore, the SSD 380 avoids write amplifications and read disturbances. In addition, transfers to the buffer circuit 370 are much faster than to the SSD. Accordingly, the overall access time is much faster than with the SSD.

The above example only illustrates the concept of waiting for the data requests to accumulate to match the granularity of the destination. The example does not describe other details including eviction, status updating, etc.

FIG. 4 is a diagram illustrating the command converter 222 shown in FIG. 2 according to an embodiment. The command converter 222 includes a main memory interface 410, a write request list 422, a read request list 424, a logic circuit 426, an access matcher circuit 428, a buffer and address circuit 430, and an SSD interface 450. The command converter 222 may include more or less than the above elements.

The main memory interface 410 interfaces to the access logic circuit for the main memory. It is connected to the MUX 270 which in turns is connected to the memory controller 280 and to the main memory circuit 260. It may include acknowledgement signals, synchronizing signals, and other control and timing signals necessary for the data requests and accesses.

The write request list 422 is a storage element or circuit that is configured to store write requests of the main memory circuit 260. It is mainly used for temporary storage of write requests that are pending and waiting for data to be combined or merged into the second granularity. The read request list 424 is a storage element or circuit that is configured to store read requests of the main memory circuit 260. It is mainly used for temporary storage of read requests that are pending and waiting for data to be returned from the SSD device.

The logic circuit 426 performs the overall control function for the command converter 222. It communicates with the write request list 422, the read request list 424, and the buffer and address circuit 430 via a bus 420. In addition, it also communicates with the main memory interface 410 and the SSD interface 450 to provide read and write responses to the host (e.g., CPU 282 in FIG. 2) or to the SSS circuit 250 in FIG. 2. The logic circuit 426 receives an access result 429 from the access matcher circuit 428 to perform actions in response to the access request. The access matcher circuit 428 is configured to generate the access result 429 based on a comparison of a request address and the addresses stored in the buffer and address circuit 430. If there is a match, the access result 429 is asserted to indicate an access hit. If there is no match, the access result 429 is negated to indicate an access miss. Since an access request includes a read access request and a write access request, there will be four situations as reported by the access result 429: a read hit, a read miss, a write hit, and a write miss. The logic circuit 426 is configured to perform actions based on at least one of the access result 429 and status conditions of the access as will be described later in the following.

The buffer and address circuit 430 provides temporary storage for the data and the address in the access requests. This temporary storage performs a similar function as that of the buffer circuit 370 described in FIG. 3. The buffer and address circuit 430 includes an address list 432, a write buffer 434, and a data buffer 436. The buffer and address circuit 430 may include more or less than the above elements. The address list 432 is configured to store at least one address of the access request. It also includes status conditions associated with the at least one address. It provides the list of all data that have been stored in the buffer so far. Therefore, by comparing the address of a new access request with the address list 432, it is possible to determine if the access is a hit or a miss. The write buffer 434 is configured to store write data (WD) to be merged with the data stored in the data buffer 436 to prepare for transferring the write data to be written to the SSD device in the SSS circuit 250. The merging operation is in essence an operation that combines data into a contiguous group that matches the second granularity of the access type by the SSD device in the SSS circuit 250. The data buffer 436 is configured to store the data corresponding to the addresses in the address list 432. It may contain both read data and write data according to the access requests.

The SSD interface 450 is configured to interface to the BCM circuit 230 which in turned communicates with the SSS circuit 250. The SSD interface 450 receives control signals from the logic circuit 426 and communicates with the access matcher circuit 428 to transmit and receive addresses from and to the SSS circuit 250.

FIG. 5 is a diagram illustrating the buffer and address circuit 430 shown in FIG. 4 according to an embodiment. As described in FIG. 4, the buffer and address circuit 430 includes the write buffer 434, the data buffer 436, and the address list 432.

The write buffer 434 includes the write data (WD) of the requests 1 through K (where K is a positive integer) to be merged into the data buffer 436. The data buffer 436 includes the access data (read and write) of the requests 1 through M (M is a positive integer). The address list 432 includes three components or fields: an address field 512, a completion field 514, and a modification field 516. The address field 512 indicates the addresses of the data stored in the data buffer 436. The completion field 514 represents a status associated with the address in the address field 512. It refers to the completion status of the granularity conversion. It has mainly two values: ready and pending. A ready status indicates that the data is ready to be read (for a read access) or to be written (for a write access). The access response to the host or the access request device can then be performed. A pending status indicates that the data has not yet been ready to be read (for a read access) or to be written (for a write access). The modification field 516 represents a status associated with the address in the address field 512. It refers to whether the data at the corresponding address has been modified. It has two main values: unmodified or clean and dirty. An unmodified status indicates that the data has not been modified while in the data buffer 436. A dirty status indicates that the data has been modified while in the data buffer 436. If the data has not been modified, it can be read without updating in the SSD device. If the data is dirty, the SSD device needs to be updated with this modified data when it is evicted from the data buffer 436.

Numerical examples are shown to illustrate these items. These examples include a write buffer example 534, a data buffer example 536, an address example 512, a completion example 514, and a modification example 516. In these examples, the bits are shown in hexadecimal. It is assumed that the size of the data in the write buffer 434 is 16 bits (4 hexadecimal characters), the size of the data in the data buffer 436 is 64 bits (16 hexadecimal characters), the size of an address in the address field 512 is 16 bits (4 hexadecimal characters), the size of the completion field 514 is 1 bit (0 = pending, 1 = ready), and the size of the modification field is 1 bit (0=unmodified), 1 = dirty).

As shown in the example, the address EE42 contains the data 65FABC41281EB185, which is ready and is unmodified. Similarly, the address 03AC contains the data AF762AB15ADC620E, which is pending and dirty. The address 340C contains the data 027A5CE7A05BCF8A, which is ready and is unmodified.

The data buffer 436 may be considered a first buffer. It is configured to store first data of a first access type from an access request device such as the host 282. The first access type has a first granularity. A second access type is for the SSD device and has a second granularity. The address list 432 is configured to store at least one address of the first data and to have at least a first status such as the completion status and a second status such as the modification status. The first and second statues are associated with one of the at least one address.

The access matcher circuit 428 compares the address from the access request with the addresses in the address list 432 to determine if there is a match. The comparison may be performed using a comparator circuit or in a content addressable memory for fast matching. The access result may show there is a match, or an access hit, or not a match, or an access miss. Depending on the access result and the statuses, the logic circuit 426 in FIG. 4 may perform an action that provides granularity conversion for the data as follows.

For a read hit, the action depends on whether the first status is ready or pending. In response to a read request of the first access type resulting in a read hit and the first status corresponding to the read request being ready, the action includes returning a second data corresponding to the read request to the access request device. In response to a read request of the first access type resulting in a read hit and the first status associated with the read request being pending, the action includes pushing the read request into the read request list.

For a read miss, the action includes at least two operations: (1) pushing the read request into the address list 432 and setting the first status corresponding to the read request to pending, and (2) issuing a read request of the second access type to the SSD device in the SSS circuit 250. While waiting for the SSD device to return the data, the logic circuit 426 checks if an eviction is triggered due to the address list 432 being full and whether the data is dirty. The action therefore further includes: (1) evicting data from the first buffer and address corresponding to the data from the address list in response to the address list being full, and (2) in response to the second status associated with the evicted data being dirty, sending the evicted data and issuing a write request of the second access type to a solid-state drive (SSD) device. When the read data returning to the first buffer from the SSD device, the action further includes: (1) setting the first status associated with the read data to ready, (2) returning one or more read requests in the read request list having the second status being pending to the access request device, and (3) merging write data from a second buffer into the first buffer and setting the second status corresponding to the write data to dirty.

For a write hit, the action depends on whether the first status is ready or pending. In response to a write request of the first access type resulting in a write hit and the first status corresponding to the write request being ready, the action includes writing data into the first buffer and responding to the access request device. In response to a write request of the first access type resulting in a write hit and the first status associated with the write request being pending, the action includes pushing the write request into the write request list.

For a write miss, the action includes at least two operations: (1) pushing the write request into the address list 432 and setting the first status corresponding to the write request to pending, and (2) issuing a read request of the second access type to a solid-state drive (SSD) device. While waiting for the SSD device to return the data, the logic circuit 426 checks if an eviction is triggered due to the address list 432 being full and whether the data is dirty. The action therefore further includes: (1) evicting data from the first buffer and address corresponding to the data from the address list in response to the address list being full, and (2) in response to the second status associated with the evicted data being dirty, sending the evicted data and issuing a write request of the second access type to a solid-state drive (SSD) device. When the read data returning to the first buffer from the SSD device, the action further includes: (1) setting the first status associated with the read data to ready, (2) merging write data from a second buffer into the first buffer and setting the second status corresponding to the write data to dirty, and (3) returning one or more read requests having the second status being pending to the access request device.

As shown in the above, the actions by the logic circuit 426 have some common operations for both read and write access requests. Accordingly, these common operations may be combined in response to the triggering condition or conditions with the term "read" or "write" being replaced by "access." For example, in response to an access miss, the action includes pushing the access request into the address list, setting the first status corresponding to the access request to pending, and evicting data from the first buffer and address corresponding to the data from the address list in response to, or based on, the address list being full.

The above actions may be further illustrated by flowcharts. In the following, each of the

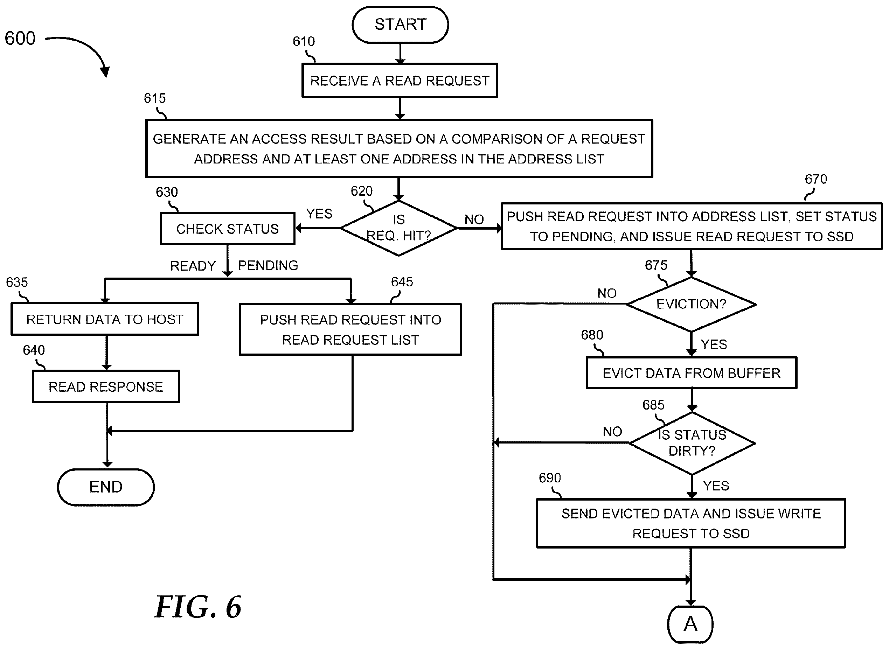

FIGS. 6, 7, and 8 shows a flowchart to illustrate a process. The flowchart is for illustrative purposes only and may not accurately describe all components and their operations. For illustrative purposes, the process is shown as a standalone process. In practice, the process may be performed in conjunction with or any other process that services an access request, either read or write, from the host. In addition, while the flowchart may show a sequential procedure, operations or blocks in the process can be carried out in parallel. Furthermore, the order of the sequential process may be changed.

FIG. 6 is a flowchart illustrating a process 600 for a read access request according to an embodiment.

Upon START, the process 600 receives a read request (Block 610) from an access request device such as the host 282 shown in FIG. 2. The read request is an access request to read a data of a first access type having a first granularity. Next, the process 600 generates an access result based on a comparison of a request address and at least one address in the address list (Block 615). The request address is contained in the access request. Then, the process 600 determines if the access result indicates a hit or a miss (Block 620). If it is a hit (YES at Block 620), the process 600 checks the completion status of the data item corresponding to the address in the access request in the address list (Block 630). If it is ready, the process 600 returns the data to the access request device or the host (Block 635). The process 600 then performs the response for the read operation (Block 640) and is then terminated. If the completion status of the data item is pending, the process 600 pushes the read request into the read request list (Block 645) and is then terminated.

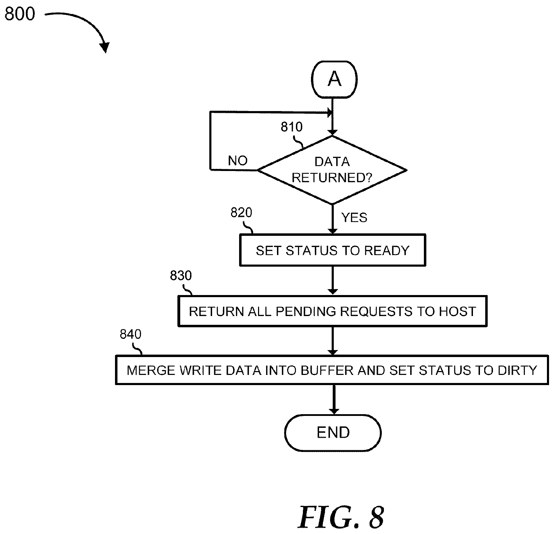

If the access result indicates a miss (NO at Block 620), the process 600 pushes the read request into the address list, sets the completion status corresponding to the read request to pending, and issues a read request of the second granularity access to the SSD device (Block 670). Next, the process 600 determines if an eviction is triggered (Block 675). If not, the process 600 goes to the continuation block A shown in FIG. 8. Otherwise (YES at Block 675), the process 600 evicts data from the data buffer (Block 680). Then, the process 600 determines if the modification status of the evicted data is dirty (Block 685). If not (NO at block 685), the process 600 goes to the continuation block A shown in FIG. 8. Otherwise (YES at block 685), the process 600 sends the evicted data and issues a write request to the SSD device (Block 690) so that the evicted data can be written to the SSD device, and goes to the continuation block A shown in FIG. 8.

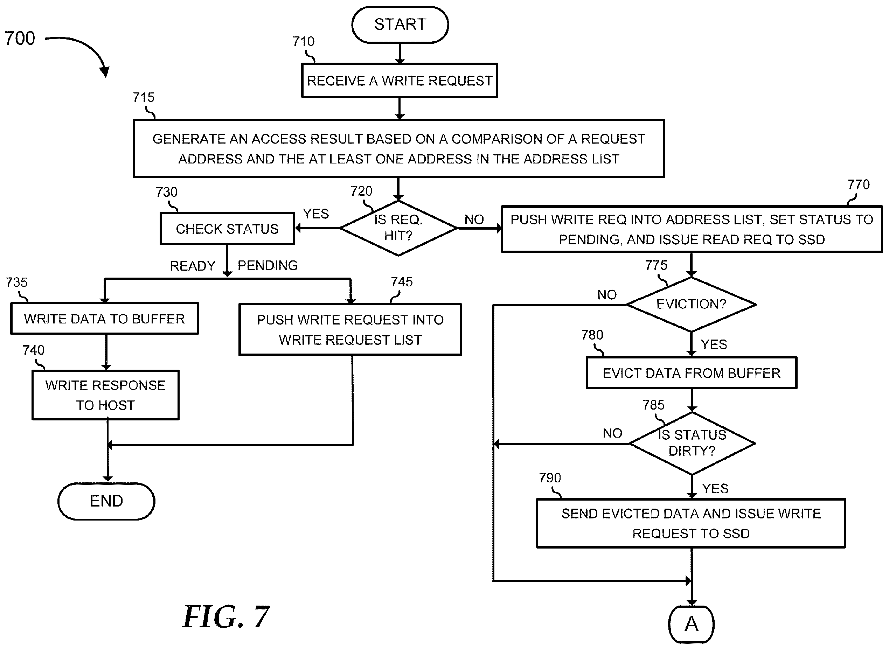

FIG. 7 is a flowchart illustrating a process 700 for a write access request according to an embodiment.

Upon START, the process 700 receives a write request (Block 710) from an access request device such as the host 282 shown in FIG. 2. The write request is an access request to write a data of a first access type having a first granularity. Next, the process 700 generates an access result based on a comparison of a request address and at least one address in the address list (Block 715). The request address is contained in the access request. Then, the process 600 determines if the access result indicates a hit or a miss (Block 720). If it is a hit (YES at Block 720), the process 700 checks the completion status of the data item corresponding to the address in the access request in the address list (Block 730). If it is ready, the process 700 writes the data to the data buffer (Block 735). The process 700 then performs the response for the write operation (Block 740) and is then terminated. If the completion status of the data item is pending, the process 600 pushes the write request into the write request list (Block 745) and is then terminated.

If the access result indicates a miss (NO at Block 720), the process 700 pushes the write request into the address list, sets the completion status corresponding to the write request to pending, and issues a read request of the second granularity access to the SSD device (Block 770). Next, the process 700 determines if an eviction is triggered (Block 775). If not, the process 700 goes to the continuation block A shown in FIG. 8. Otherwise (YES at Block 575), the process 700 evicts data from the data buffer (Block 780). Then, the process 700 determines if the modification status of the evicted data is dirty (Block 785). If not (NO at block 785), the process 700 goes to the continuation block A shown in FIG. 8. Otherwise (YES at block 785), the process 700 sends the evicted data and issues a write request to the SSD device (Block 790) so that the evicted data can be written to the SSD device. The process 700 then goes to the continuation block A shown in FIG. 8.

FIG. 8 is a flowchart illustrating a process 800 for a continuation process for read and write access processes 600 and 700 according to an embodiment. The process 800 is the process in which the data is returned from the SSD device after the request in block 670 of FIG. 6 or block 770 in FIG. 7. The process to return the data may take place concurrently or in an overlapping manner while other operations such as blocks 680 through 690 in FIG. 6 or 780 through 790 in FIG. 7 are taking place.

The process 800 determines if the data is returned from the SSD device (Block 810). If not (NO at block 810), the process 800 returns to block 810 and continues waiting for data return. If data is returned (YES at block 810), the process 800 sets the completion status of the data item to ready (Block 820). Then, the process 800 returns all pending requests to the access request device or the host (Block 830). Next, the process 800 merges write data in the write buffer to the data buffer and sets the modification status to dirty (Block 840). The process 800 is then terminated.

As explained above, the flowcharts in FIGS. 6 and 7 have several common operations for both read and write access requests. Accordingly, they can be combined with a provision to have separate operations corresponding to read or write accesses.

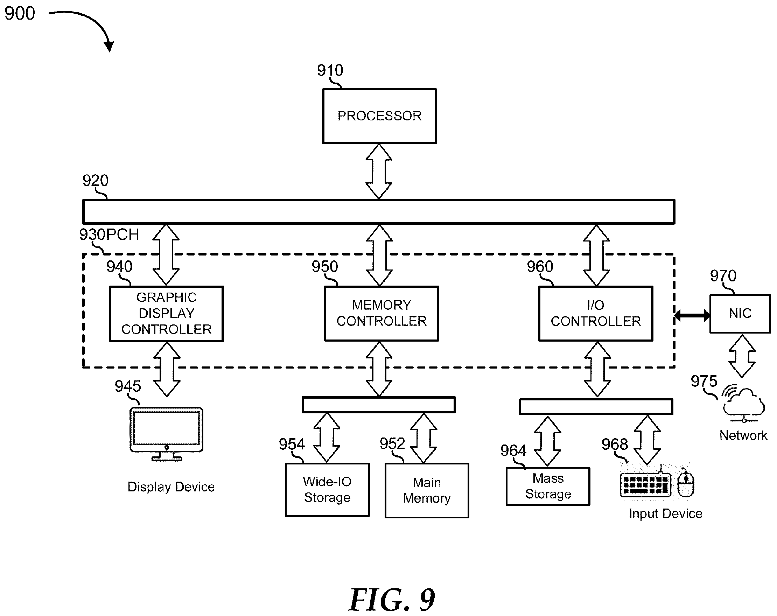

FIG. 9 is a diagram illustrating a computing or processing system 900 according to an embodiment. The computing system 900 may be a system in which the wide-IO storage circuit may be deployed. It may supplement or replace any one or more of the blocks shown in FIG. 1. It includes a central processing unit (CPU) or a processor 910, a bus 920, and a platform controller hub (PCH) 930. The PCH 930 may include a graphic display controller (GDC) 940, a memory controller 950, and an input/output (I/O) controller 960. The processing system 900 may include more or less than the above components. In addition, a component may be integrated into another component. As shown in FIG. 9, all the controllers 940, 950, and 960 are integrated in the PCH 930. The integration may be partial and/or overlapped. For example, the GDC 940 may be integrated into the processor 910, the I/O controller 960 and the memory controller 950 may be integrated into one single controller, etc.

The processor 910 is a programmable device that may execute a program or a collection of instructions to carry out a task. It may be a general-purpose processor, a digital signal processor, a microcontroller, or a specially designed processor such as one design from Applications Specific Integrated Circuit (ASIC). It may include a single core or multiple cores. Each core may have multi-way multi-threading. The processor 910 may have simultaneous multithreading feature to further exploit the parallelism due to multiple threads across the multiple cores. In addition, the processor 910 may have internal caches at multiple levels. It may be the CPU 282 in FIG. 2.

The bus 920 may be any suitable bus connecting the processor 910 to other devices, including the PCH 930. For example, the bus 920 may be a Direct Media Interface (DMI).

The PCH 930 is a highly integrated chipset that includes many functionalities to provide interface to several devices such as memory devices, input/output devices, storage devices, network devices, etc.

The I/O controller 960 controls input devices 968 (e.g., stylus, keyboard, and mouse, microphone, image sensor) and output devices (e.g., audio devices, speaker, scanner, printer), and a mass storage 964. The mass storage 964 may also include CD-ROM, hard disk, and SSDs. It also has a network interface card (NIC) 970 which provides an interface to a network and wireless medium 975.

The memory controller 950 controls memory devices such as a main memory 952 and a wide-IO storage 954. The main memory 952 includes random access memory (RAM) and/or the read-only memory (ROM) and other types of memory such as the cache memory or an SSD. The main memory 952 may store instructions or programs, loaded from a mass storage device, that, when executed by the processor 910, cause the processor 910 to perform operations as described above. It may also store data used in the operations. The ROM may include instructions, programs, constants, or data that are maintained whether it is powered or not. The instructions or programs may correspond to the functionalities described above.

The GDC 940 controls a display device 945 and provides graphical operations. It may be integrated inside the processor 910. It typically has a graphical user interface (GUI) to allow interactions with a user who may send a command or activate a function.

Additional devices or bus interfaces may be available for interconnections and/or expansion. Some examples may include the Peripheral Component Interconnect Express (PCIe) bus, the Universal Serial Bus (USB), etc.

All or part of an embodiment may be implemented by various means depending on applications according to particular features, functions. These means may include hardware, software, or firmware, or any combination thereof. A hardware, software, or firmware element may have several modules coupled to one another. A hardware module is coupled to another module by mechanical, electrical, optical, electromagnetic or any physical connections. A software module is coupled to another module by a function, procedure, method, subprogram, or subroutine call, a jump, a link, a parameter, variable, and argument passing, a function return, etc. A software module is coupled to another module to receive variables, parameters, arguments, pointers, etc. and/or to generate or pass results, updated variables, pointers, etc. A firmware module is coupled to another module by any combination of hardware and software coupling methods above. A hardware, software, or firmware module may be coupled to any one of another hardware, software, or firmware module. A module may also be a software driver or interface to interact with the operating system running on the platform. A module may also be a hardware driver to configure, set up, initialize, send and receive data to and from a hardware device. An apparatus may include any combination of hardware, software, and firmware modules.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. An apparatus comprising:
a first buffer (436) configured to store first data of a first access type from an access request device (282) having a first granularity;
an address list (432) configured to store at least one address of the first data and to have at least a first status and a second status associated with the at least one address;
an access matcher (428) configured to generate an access result based on a comparison of a request address and the at least one address in the address list (432); and
a logic circuit (426) configured to perform an action based on at least one of the access result, the first status, or the second status,
wherein the action includes combining the first data into a second data of a second access type having a second granularity larger than the first granularity.

2. The apparatus of claim 1,
wherein the first status is associated with a granularity completion and the second status is associated with a modification of data in the first buffer (436), and
wherein the granularity completion is one of ready or pending and the modification is one of unmodified or dirty.

3. The apparatus of claim 2, further comprising:
a read request list (424) configured to store read requests of the first access type; and
a write request list (422) configured to store write requests of the first access type.

4. The apparatus of claim 3,
wherein in response to a read request of the first access type resulting in a read hit and the first status corresponding to the read request being ready, the action includes returning a second data corresponding to the read request to the access request device (282),
wherein in response to a read request of the first access type resulting in a read hit and the first status associated with the read request being pending, the action includes pushing the read request into the read request list (424),
wherein in response to a read request of the first access type resulting in a read miss, the action includes: pushing the read request into the address list (432) and setting the first status corresponding to the read request to pending, and issuing a read request of the second access type to a solid-state drive, SSD, device.
wherein in response to a read request of the first access type resulting in a read miss, the action further includes: evicting data from the first buffer (436) and address corresponding to the data from the address list (432) based on the address list (432) being full, and in response to the second status associated with the evicted data being dirty, sending the evicted data and issuing a write request of the second access type to a solid-state drive, SSD, device.

5. The apparatus of claim 4,
wherein in response to read data returning to the first buffer (436) from the solid-state drive, SSD, device, the action further includes: setting the first status associated with the read data to ready, returning one or more read requests in the read request list (424) having the second status being pending to the access request device (282), and merging write data from a second buffer into the first buffer (436) and setting the second status corresponding to the write data to dirty.

6. The apparatus of any one of claims 3 to 5,
wherein in response to a write request of the first access type resulting in a write hit and the first status corresponding to the write request being ready, the action includes writing data into the first buffer (436) and responding to the access request device (282);
wherein in response to a write request of the first access type resulting in a write hit and the first status associated with the write request being pending, the action includes pushing the write request into the write request list (422);
wherein in response to a write request of the first access type resulting in a write miss, the action includes: pushing the write request into the address list (432) and setting the first status corresponding to the write request to pending, and issuing a read request of the second access type to a solid-state drive, SSD, device.
wherein in response to a write request of the first access type resulting in a write miss, the action further includes: evicting data from the first buffer (436) and address corresponding to the data from the address list (432) based on the address list (432) being full, and in response to the second status associated with the evicted data being dirty, sending the evicted data and issuing a write request of the second access type to a solid-state drive, SSD, device.

7. The apparatus of claim 6,
wherein in response to read data returning to the first buffer (436) from the SSD device, the action further includes: setting the first status associated with the read data to ready, merging write data from a second buffer into the first buffer (436) and setting the second status corresponding to the write data to dirty, and returning one or more read requests having the second status being pending to the access request device (282).

8. A method comprising:
storing first data of a first access type from an access request device (282) having a first granularity in a first buffer (436);
storing at least one address of the first data in an address list (432), the address list (432) having at least a first status and a second status associated with the at least one address;
generating an access result based on a comparison of a request address and the at least one address in the address list (432); and
performing an action based on at least one of the access result, the first status or the second status,
wherein performing the action includes combining the first data into a second data of a second access type having a second granularity larger than the first granularity.

9. The method of claim 8,
wherein the first status is associated with a granularity completion and the second status is associated with a modification of data in the first buffer (436), and
wherein the granularity completion is one of ready or pending and the modification is one of unmodified or dirty.

10. The method of claim 9, further comprising:
storing read requests of the first access type in a read request list (424); and
storing write requests of the first access type in a write request list (422).

11. The method of claim 10, wherein performing the action comprises:
returning a second data corresponding to the read request to the access request device (282) in response to a read request of the first access type resulting in a read hit and the first status corresponding to the read request being ready;
pushing the read request into the read request list (424) in response to a read request of the first access type resulting in a read hit and the first status associated with the read request being pending;
in response to a read request of the first access type resulting in a read miss, pushing the read request into the address list (432) and setting the first status corresponding to the read request to pending, issuing a read request of the second access type to a solid-state drive, SSD, device, evicting data from the first buffer (436) and address corresponding to the data from the address list (432) based on the address list (432) being full, and sending the evicted data and issuing a write request of the second access type to a solid-state drive, SSD, device based on the second status associated with the evicted data being dirty.

12. The method of claim 11, wherein performing the action further comprises:
in response to read data returning to the first buffer (436) from the solid-state drive, SSD, device, setting the first status associated with the read data to ready, returning one or more read requests in the read request list (424) to the access request device (282), and merging write data from a second buffer into the first buffer (436) and setting the second status corresponding to the write data to dirty.

13. The method of any one of claims 10 to 12, wherein performing the action comprises
writing data into the first buffer (436) and responding to the access request device (282) in response to a write request of the first access type resulting in a write hit and the first status corresponding to the write request being ready;
pushing the write request into the write request list (422) in response to a write request of the first access type resulting in a write hit and the first status associated with the write request being pending; and
in response to a write request of the first access type resulting in a write miss, pushing the write request into the address list (432) and setting the first status corresponding to the write request to pending, issuing a read request of the second access type to a solid-state drive, SSD, device, evicting data from the first buffer (436) and address corresponding to the evicted data from the address list (432) based on the address list (432) being full, and sending the evicted data and issuing a write request of the second access type to a solid-state drive, SSD, device based on the second status associated with the evicted data being dirty.

14. The method of claim 13, wherein performing the action further comprises:
in response to read data returning to the first buffer from the SSD device, setting the first status associated with the read data to ready, merging write data from a second buffer into the first buffer (436) and setting the second status corresponding to the write data to dirty, and returning at least one read request in the read request list (424) having the second status being pending to the access request device (282).

15. The apparatus or the method according to any one of the preceding claims, wherein the first access type is a dynamic random access memory, DRAM, access to a DRAM device and the second access type is a solid-state drive, SSD, access to an SSD device, wherein the first granularity exemplarily corresponds to a page size in the DRAM device and the second granularity exemplarily corresponds to a page size in the SSD device, and/or wherein the first buffer (436) uses a first-in-first-out, FIFO, policy to evict data.

16. A system comprising:
a host processor (282);
a first memory device having a first access type and a first granularity;
a second memory device having a second access type and a second granularity larger than the first granularity; and
a command converter circuit, comprising:
a first buffer (436) configured to store first data of the first access type and the first granularity from the host processor (282);
an address list (432) configured to store at least one address of the first data and to have at least a first status and a second status associated with one of the at least one address;
an access matcher (428) configured to generate an access result based on a comparison of a request address and the at least one address in the address list (432); and
a logic circuit (426) configured to perform an action based on at least one of the access result, the first status, or the second status,
wherein the action includes combining the first data into a second data of the second access type having the second granularity.
